Europäisches Patentamt

European Patent Office

Office européen des brevets

(11) Publication number: **0 154 292**
**B1**

# EUROPEAN PATENT SPECIFICATION

(45) Date of publication of patent specification: **10.05.89**

(21) Application number: **85102160.0**

(22) Date of filing: **27.02.85**

(51) Int. Cl.⁴: **F 16 L 5/02,** F 16 L 59/12

(54) **A lead-through sleeve for insulating a pipe or the like extending through a floor or wall.**

(30) Priority: **27.02.84 DK 1101/84**

(43) Date of publication of application:
**11.09.85 Bulletin 85/37**

(45) Publication of the grant of the patent:
**10.05.89 Bulletin 89/19**

(84) Designated Contracting States:
**AT BE CH DE FR GB IT LI LU NL SE**

(56) References cited:
**DD-A- 63 933**
**DD-A- 108 143**
**DE-A-1 500 648**
**DE-B-1 198 624**
**DE-B-1 249 024**
**DE-B-1 284 744**
**DE-U-1 810 138**
**GB-A- 691 394**
**US-A-2 478 552**
**US-A-3 242 948**
**US-A-3 848 897**

(73) Proprietor: **Armadan Isolering Engros Handel
A/S
Lykkesholms Allé 36
DK-1902 Copenhagen V (DK)**

(72) Inventor: **Sorensen, Jorgen B.
Klovertoften 21
DK-2740 Skovlunde (DK)**

(74) Representative: **Füchsle, Klaus, Dipl.-Ing. et al
Hoffmann . Eitle & Partner Patentanwälte
Arabellastrasse 4
D-8000 München 81 (DE)**

Courier Press, Leamington Spa, England.

## Description

The invention relates to a lead-through sleeve for surrounding a conduit or pipe, said sleeve comprising an outer mantle or shell for encasing a material placed within the space between said conduit or pipe and the inner surface of said outer mantle or shell.

At the present time many authorities are preparing the introduction of new standards for technical installations and their thermal insulation in building structures, and among other requirements all these new standards require lead lead-throughs in floors, roofs and walls to protect those installations on the one hand and the surrounding parts of such floors, roofs and walls on the other hand from each other. Further, the lead-throughs are to comply with a number of conditions with regard to fire safety and termination.

A lead-through sleeve of the type initially described is already known from DE—U—1 810 138. The sleeve disclosed therein a formed by two outer mantles both of them having a longitudinal slit 4 for allowing placement of said sleeve sideways on a pipe. After mounting of the sleeve around the pipe, the space between the mantles of the sleeve and the pipe is filled by casting under use of a casting material which does not form a part of the sleeve unit itself.

Furthermore, DD—A—108 143 discloses a sleeve-like form for becoming mounted sideways around a pipe. After such mounting, a space between the form and the pipe may be filled by a thermically insulating material such as a plastic foam. Afterwards the form may be removed or kept around the insulating material. While the pipe may lead through an opening of a wall of a building structure, the form, even when kept around the insulating material after the completion of the filling operation, does not extend into or through said opening, and thus does not acts as a lead-through sleeve.

US—A—3 242 948 discloses a pipe jacket, but also not a lead-through sleeve, comprising a mantle for surrounding an insulation material which prior to the mounting of the mantle is brought onto a pipe as one or more layers of a relatively soft, fibrous material. The mantle has a longitudinal slit for sideway-placing on the pipe, and locking means.

On this background it is an object of the present invention to provide a lead-through sleeve of the type referred to initially which can be mounted easily and rapidly even by less experienced personnel.

The object stated is attained with a lead-through sleeve which according to the present invention is characterized in that said outer mantle or shell is of flexible or hinged sheet or web material substantially inextensible in the circumferential direction, that the material being soft and elastically resilient, forms an inner mantle or lining, that said inner mantle or lining, at least over portions of its outer surface, is cemented or glued or otherwise secured to the inner surface of the outer mantle or shell, that said inner mantle or lining is formed by an elastic plastic foam or by an elastic foam rubber, and that said inner mantle or lining is so dimensioned relatively to the outer mantle and the conduit or pipe that the elastic force of the inner mantle is sufficient to overcome the weight of the the lead-through sleeve and expected vibrational forces, but insufficient to prevent the lead-through sleeve from being moved along the conduit or pipe by exerting an additional motive force.

Since the majority of pipes already installed are not accessible from the ends, according of a preferred embodiment of the present invention said outer mantle or shell and said inner mantle or lining of said lead-through sleeve each form a longitudinal slot or slit or gap for sideway placing of the combined mantles on said conduit or pipe.

If the lead-through sleeve is of the type having at least one substantially radial and radially and axially continuous slit or slot and one or a number of locking means adapted to hold said slit or slot substantially closed, then it is preferred that the locking means are so shaped and adapted that they are held releasably in the locking position by the elastic pressure of the inner mantle or lining, e.g. by comprising radially directed openings on one side of the slit or slot and radially directed locking tabs on the opposite side of the slit or slot adapted to cooperate therewith.

In this way, the elasticity of the inner mantle or lining is utilized to hold the locking means in the locked condition, so that special springs or the like will not be needed; this will reduce the production costs.

If the lead-through sleeve is of the type having at least one substantially radial and radially and axially continuous slit, slot and/or gap and one or a number of locking means adapted to maintain said slit, slot and/or gap at a constant width or closed, then it is preferred that the locking member or members comprise(s) one or a number of flexible locking strap or straps adapted to cooperate with means on the outer mantle or shell in such a manner as to make it possible to adjust the width of said slit, slot and/or gap.

In this way, it is possible to adjust the grip of the inner mantle around the pipe using simple components, that can be produced at a low cost.

A further development of the last-mentioned embodiment is characterized in that each locking strap comprises

a) an anchor adapted to be permanently connected to an anchor opening in the outer mantle or shell on one side of a gap between two mutually facing edges of the outer mantle or shell, and

b) a hook adapted to be releasably connected to one of a number of hook openings distributed in the circumferential direction on the opposite side of said gap.

The permanent connection between the anchor and the anchor opening may be obtained in a simple manner, if said anchor opening has teeth adapted to cut into the material of the anchor during its insertion into its final working position in the anchor opening and to hold it against movement away from said final working position.

In order to make it easier to get hold of the end of the strap carrying the hook, it is preferred that the end of each locking strap carrying the hook has a lifting tab, the underside of which at least in parts extends away from the hook, for making it easier to lift the hook out of a hook opening, into which it has been inserted.

The present invention is now to be explained in a more detailed manner with reference to the attached drawings, in which

Figure 1 is a longitudinal sectional view of a floor in a building structure with a pipe extending therethrough, said pipe having placed on it a lead-through sleeve according to the invention,

Figure 2 is a transverse sectional view through the sleeve shown in Figure 1,

Figure 3 is a partial transverse sectional view showing the construction of the locking means according to one embodiment,

Figure 4 is a perpective view showing a lead-through sleeve with locking means according to another embodiment,

Figure 5 is a transverse section view through the sleeve of Figure 4, showing the construction of the locking means according to said other embodiment,

Figure 6 and 7 show a locking strap in plan and side view respectively, and

Figure 8 shows the configuration of the various openings in the lead-through sleeve for cooperation with the locking strap shown in Figures 6 and 7.

The lead-through sleeve shown in the drawing comprises a lining 1 made of heat-insulating and elastically resilient material, as for example elastic foam plastic or elastic foam rubber. On the outside of the lining 1 is placed a shell 2, which in the example shown consists of sheet material, such as for example sheet aluminium, and encases the lining 1 in such a manner that when the lead-through sleeve has been placed on a pipe 3 to be insulated, the lining 1 will be held against the pipe 3 with sufficient force for the ensuing friction between the lining 1 and the pipe 3 to hold the lead-through sleeve securely on the pipe, as least to a sufficient degree to withstand the force of gravity and/or vibrational forces that may occur.

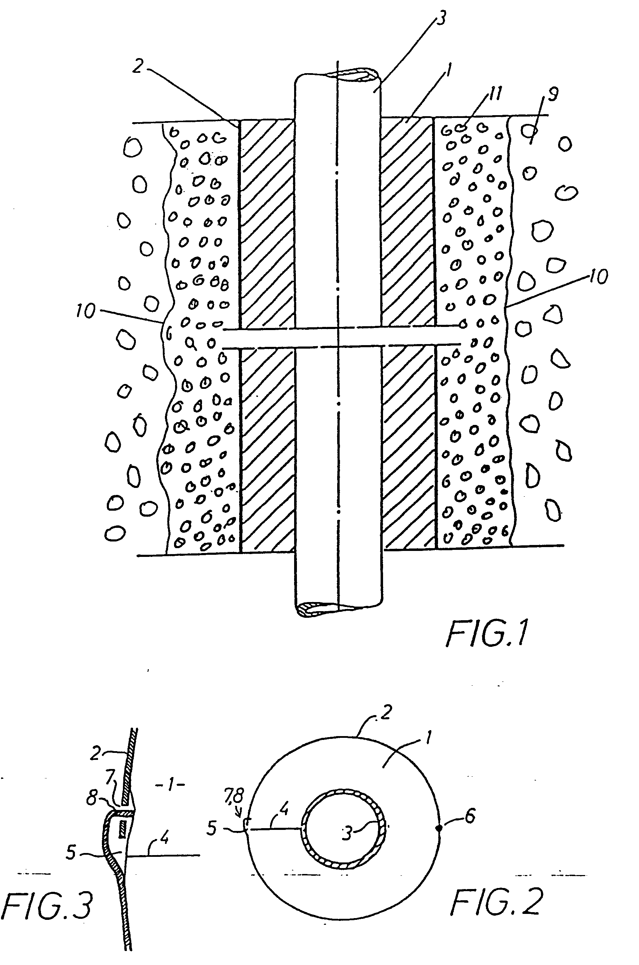

As will be evident from Figures 2 and 3, the lining 1 has a radially extending and radially and longitudinally continuous slit 4, and outside of this slit 4 the shell 2 has a corresponding continuous gap 5. Diametrically opposite the gap 5 the shell 2 has a hinge 6, making it easier to open the shell 1 than would be the case if it consisted of one single piece and hence had to be bent.

The shell 2 is held in the closed position shown by suitable locking means, of which there may be one or a number.

In the exemplary embodiment shown in Figure 1—3 the locking means comprise a number of generally radially directed openings 7 in the sheet material on one side of the gap 5, as well as a corresponding number of cooperating, radially directed locking tabs 8 secured to or shaped integrally with the sheet material on the opposite side of the gap 5. As will be evident from Figure 3, the locking means 7, 8 may only be opened by pressing that part of the shell 2, in which the openings 7 are situated, inwards against the elastic force of the lining 1.

As evident from Figure 1, the pipe 3 extends through a floor 9 in a building structure, said floor 9 being for example an inter-storey partition. The invention is, however, equally applicable in other cases, where a pipe extends through an opening, such as in a vertical partition, roof or the like. The original condition prior to installing the lead-through sleeve is not shown in the drawing, but one can imagine that the floor 9 initially has embraced the sides of the pipe 3 more or less closely. When the lead-through sleeve is to be installed in such an existing arrangement, one will first remove some material from the floor 9, such as by chiselling-out, to form a lead-through opening, the limits of which are shown at 10. As shown in Figure 1 the lead-through opening 10 may be formed with ample dimensions relative to the lead-through sleeve 1, 2, or it may be narrower, all depending on circumstances in each case.

When the lead-through opening 10 has been formed, the lead-through sleeve 1, 2 is placed on the pipe 3. Since pipes already installed are normally not accessible from one or both ends, it will be necessary to open the lead-through sleeve by opening the locking means 7, 8 and swing the two halves of the shell 2 away from each other about the hinge 6, by which the lining 1, advantageously cemented or glued to the inside of the shell 2, follows the latter's movement, the slit 4 being opened. In this open condition the lead-through sleeve 1, 2 is placed sideways on the pipe 3 and is made to embrace the pipe closely, as the shell 2 is pressed firmly about the lining 1 under partial compression of the latter, whereas the part of the shell 2 having the locking openings 7 is pressed further in the inward direction, so that it can come past the innermost ends of the locking tabs 8 and engage the latter with the openings 7 as shown in the closed position in Figures 2 and 3.

In the extent to which the lead-through sleeve 1, 2 has been placed on the pipe 3 at a distance from the position shown in Figure 1, the lead-through sleeve will then be moved along the pipe 3 to this position, the friction between the lining 1 and the pipe 3 not being greater than to allow such movement.

Finally, the space between the shell 2 and the wall of the lead-through opening 10 is filled with a suitable casting mass 11, e.g. cement mortar. To prevent the casting mass 11 from flowing out below it is possible to use and "under-shuttering" in the form of a so called rosette that may be left in place after the casting mass 11 has set, or removed for the purpose of placing further insulating material on the outside of the pipe 3.

As shown in Figures 2 and 3 there are locking means 7, 8 on one side of the lead-through sleeve 1, 2 and a hinge 6 on the other side, but it lies within the scope of the invention to use releasable locking means on both sides, e.g. in the form of a U-shaped channel shaped on each edge of each half of the shell 2, one channel facing inward and the other outward. Such an arrangement makes it possible to produce the shell 2 from two halves of identical shape, both cut from one long blank, produced as by rolling.

The lead-through sleeve 1, 2 shown in Figure 1 has the same length as the thickness of the floor 9, but it is equally possible to use e.g. a longer lead-through sleeve to make it easier to connect same to further insulating material to be placed on the outside of the pipe 3. The lead-through sleeve 1, 2 may also be equipped with means, such as spring catches (not shown), for affixing rosettes on one or both sides of the floor 9.

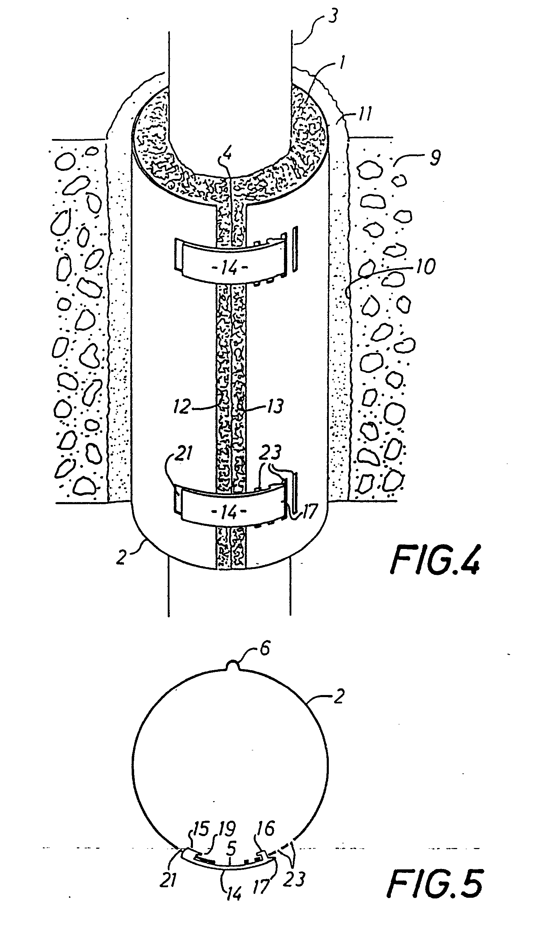

In the exemplary embodiment shown in Figures 4—8 a locking strap 14 is used instead of the locking means 7, 8 shown in Figures 2 and 3. Each locking strap 14 is anchored to one side of the shell 1 behind an edge 12, and cooperates with one of a number of hook slots 23 behind the opposite edge 13. Each locking strap 14 has at one end an anchor 15 adapted to cooperate with an anchor hole 21 behind the edge 12, and at the other end a hook 16 adapted to cooperate with a chosen one of the hook slots 23, the choice being made so as to ensure that the lining 1 presses with a suitable force against the outside of the pipe 3 with the limited friction effect explained above.

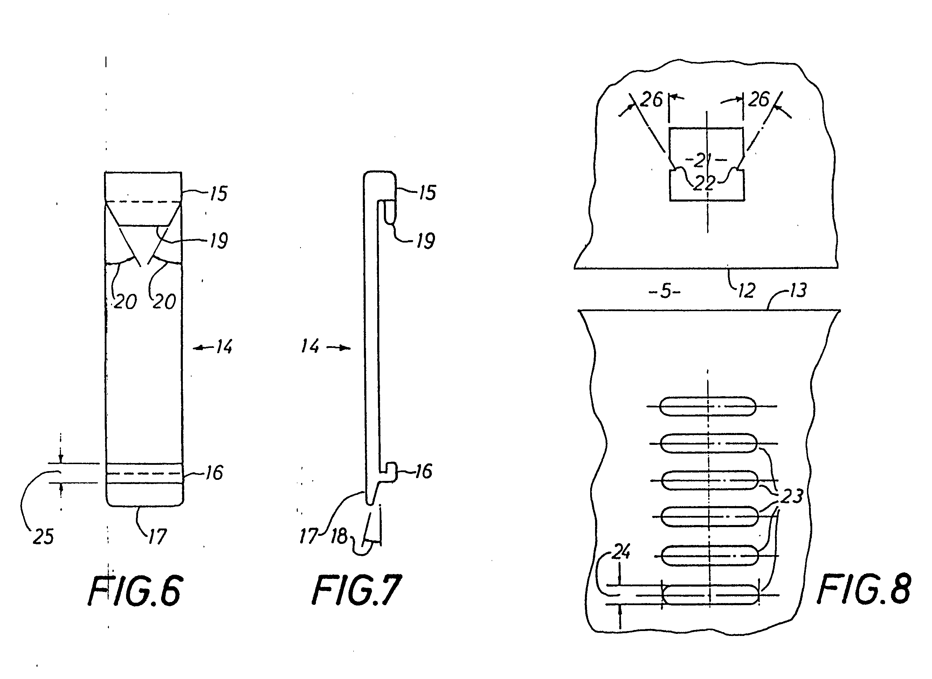

The locking straps 14 are made of a suitable flexible material that may or may not be elastically resilient, such as synthetic rubber, nylon, polyethylene or the like. As they are only subjected to tension in the comparatively short interval required for the casting mass 11 to set, the material used does not have to exhibit special long-time load-carrying characteristics. The locking straps may be made by extruding them in the profile shown in Figure 7 and subsequently cutting to size and shape, or they may be injection-molded in the final shape as shown especially in Figures 6 and 7.

It should be noted that features shown in both the embodiment of Figures 1—3 and the embodiment of Figures 4-8 and having the same reference numbers in both embodiments have already been described above with reference to Figures 1—3, for which reason they will only be mentioned below to the extent necessary for explaining the functioning of the lead-through sleeve 1, 2 and its various component parts.

The anchor 15 of each locking strap 14 is adapted to be irreversibly connected to one side or edge of the shell 1 by means of the anchor opening 21, which has locking teeth 22 protruding inwardly at an angle 26 and thus allowing movement only in the direction towards the edge 12. From Figures 6—8 it will be seen that the part of the anchor hole 21 facing away from the edge 12 has the same shape as the anchor 15 including an anchor tab 19 with sides converging at an angle 20 relative to the longitudinal direction of the strap 14, so that the anchor 15 can be inserted in that part of the anchor hole 21 and then moved towards the edge 12, so that the locking teeth 22 cut into the flanks of the anchor 15 and secure it irreversibly in the hole 21. In this final position, the anchor tab 19 lies inside the shell 2, vide Figure 5, and prevents outwardly directed movement of the anchor 15 relative to the shell 2.

On the contrary, the hook 16 on the opposite end of each locking strap 14 is adapted to be releasably engaged in one of the hook slots 23 in the other side or edge of the shell 2. This is necessary to make it possible to find the correct pressure of the lining 1 against the pipe 3 before deciding in which of the hook slots 23 to leave the hook 16. The correct pressure can easily be found by trial and error, and it will be seen that the gap 5, which in the embodiment of Figures 1—3 has a constant small width, in the embodiment of Figures 4—8 has a variable width depending on the choice of hook slot 23. This may entail a considerable distance between the edges 12 and 13 across the gap 5, but this will normally not cause any problems, as most casting masses 11 after having set are not likely to interact chemically with the material of the lining 1. Should this, however, be the case, a protective foil or film (not shown) may be placed across the gap 5 before filling-in the mass 11.

To enable the hook 16 to pass into and out of the hook slot 23, the width 24 of the hook slot should be at least equal to (or slightly less than, if rubber-like material is used for the strap 14) the width 25 of the hook 16 as measured in the longitudinal direction of the strap 14. To make it easier to lift the hook 16 out of the slot 23, the hook 16 comprises an extension in the form of a lifting tab 17, the under-side of which slopes at an angle 18 away from the hook 16. The lifting tab 17 may be lifted by inserting some sharp or pointed object, such as a screwdriver or a fingernail, on the side facing the shell 2.

The lead-through sleeve shown in Figures 4 and 5 is placed in position in the same manner as described above with reference to the embodiment shown in Figures 1—3. Then, the shell 2 is manipulated so as to bring the two edges 12 and 13 closer to each other, after which the hooks 16 on the locking straps are brought into engagement with those of the hook slots 23 giving the desired pressure or friction between the lining 1 and the pipe 3. Then, the requisite longitudinal adjustment of the lead-through sleeve 1, 2 on the pipe 3 is carried out, and finally the casting mass 11 is filled into the space between the outside of the sleeve 1, 2 and the wall of the opening 10, after which the mass 11 is allowed to set. These and further operations may be performed as described with reference to the embodiment of Figures 1—3.

## Claims

1. A lead-through sleeve for surrounding a conduit or pipe (3), said sleeve comprising an outer mantle or shell (2) for encasing a material placed within the space between said conduit or pipe (3) and the inner surface of said outer mantle or shell (2), characterized in that

(a) said outer mantle or shell (2) is of flexible or hinged sheet or web material substantially inextensible in the circumferential direction,

(b) the material being soft and elastically resilient, forms an inner mantle or lining (1),

(c) said inner mantle or lining (1), at least over portions of its outer surface, is cemented or glued or otherwise secured to the inner surface of the outer mantle or shell (2),

(d) said inner mantle or lining (1) is formed by an elastic plastic foam or by an elastic foam rubber, and

(e) said inner mantle or lining (1) is so dimensioned relatively to the outer mantle (2) and the conduit or pipe (3) that the elastic force of the inner mantle (1) is sufficient to overcome the weight of the the lead-through sleeve (1, 2) and expected vibrational forces, but insufficient to prevent the lead-through sleeve (1, 2) from being moved along the conduit or pipe (3) by exerting an additional motive force.

2. A lead-through sleeve according to claim 1, characterized in that said outer mantle or shell (2) and said inner mantle or lining (1) each form a longitudinal slot or slit or gap (4, 5) for sideway placing of the combined mantles (1, 2) on said conduit or pipe (3).

3. A lead-through sleeve according to claim 2, characterized in that said slots or slits or gaps (4, 5) are extending substantially radially and axially and that locking means (7, 8) are provided for holding said slit or slot or gap substantially closed, wherein said locking means are so shaped and adapted that they are held releasably in the locking position by the elastic pressure of the inner mantle or lining (1), e.g. by comprising radially directed openings (7) on one side of the slit or slot (4, 5) and radially directed locking tabs (8) on the opposite side of the slit or slot (4, 5) adapted to cooperate therewith.

4. A lead-through sleeve according to anyone of the preceding claims, characterized in that locking means (14) adapted to maintain a slit, slot and/or gap (4, 5) within the mantles at a constant width or closed, wherein said locking means (14) comprise one or more flexible locking strap(s) adapted to cooperate with means (21, 23) on the outer mantle or shell (1) in such a manner as to make it possible to adjust the width of said slit, slot and/or gap (4, 5).

5. A lead-through sleeve according to claim 4, characterized in that each locking strap (14) comprises

a) an anchor (15) adapted to be permanently connected to an anchor opening (21) in the outer mantle or shell (2) on one side of a gap (5) between two mutually facing edges (12, 13) of the outer mantle or shell (2), and

b) a hook (16) adapted to be releasably connected to one of a number of hook openings (23) distributed in the circumferential direction on the opposite side of said gap (5).

6. A lead-through sleeve according to claim 5 characterized in that said anchor opening (21) has teeth (22) adapted to cut into the material of the anchor (15) during its insertion into its final working position in the anchor opening (21) and to hold it against movement away from said final working position.

7. A lead-through sleeve according to any one of the claims 4-6, characterized in that the end of each locking strap (14) carrying the hook (16) has a lifting tab (17), the underside of which at least in parts extends away from the hook (16), for making it easier to lift the hook (16) out of a hook opening (23), into which it has been inserted.

## Patentansprüche

1. Durchführungsmuffe zum Umgeben einer Leitung oder eines Rohres (3), wobei die Muffe einen äußeren Mantel oder Schale (2) zum Einschließen eines Materiales aufweist, das innerhalb des Raumes zwischen der Leitung oder dem Rohr (3) und der Innenfläche des äußeren Mantels oder der Schale (2) angeordnet ist, dadurch gekennzeichnet,

(a) daß der äußere Mantel oder die Schale (2) aus flexiblem oder klappbarem bzw. schwenkbarem Blatt- er Bahnmaterial besteht, das in Umfangsrichtung im wesentlichen nicht dehnbar ist,

(b) daß das Material, das weich und elastisch nachgiebig ist, einen inneren Mantel oder ein Futter (1) bildet,

(c) daß der innere Mantel oder das Futter (1) zumindest über Teile seiner Außenfläche gekittet oder geklebt oder auf andere Weise an der inneren Fläche des äußeren Mantels oder der Schale (2) befestigt ist,

(d) daß der innere Mantel oder das Futter (2) von einem elastischen Kunststoffschaum oder einem elastischen Schaumgummi gebildet ist, und

(e) daß der innere Mantel oder das Futter (1) derart relativ zu dem äußeren Mantel (2) und der Leitung oder dem Rohr (3) dimensioniert ist, daß die elastische Kraft des inneren Mantels (1) ausreichend ist, um das Gewicht der Durchführungsmuffe (1, 2) und der erwarteten Vibrationskräfte zu überwinden, aber ungenügend ist, um die Durchführungsmuffe (1, 2) daran zu hindern, entlang der Leitung oder des Rohres (3) sich bei einem Aufbringen einer zusätzlichen Bewegungskraft zu bewegen.

2. Durchführungsmuffe nach Anspruch 1, dadurch gekennzeichnet, daß der äußere Mantel oder die Schale (2) und der innere Mantel oder das Futter (1) jeweils einen Längsschlitz oder einen Spalt oder eine Ausnehmung (4, 5) zum zeitweisen Anordnen der kombinierten Mäntel (1, 2) auf der Leitung oder dem Rohr (3) bilden.

3. Durchführungsmuffe nach Anspruch 2, dadurch gekennzeichnet, daß die Schlitze oder Spalte oder Ausnehmungen (4, 5) sich im wesentlichen radial und axial erstrecken, und daß Verriegelungseinrichtungen (7, 8) vorgesehen sind, um den Spalt oder Schlitz oder die Ausnehmung im wesentlichen geschlossen zu halten, wobei die Verriegelungseinrichtungen derart ausgebildet und angepaßt sind, daß sie lösbar in der Riegel zw. Verschlußstellung durch elastischen Druck des inneren Mantels oder des Futters (1) gehalten sind, z.B. durch Vorsehen radial gerichteter Öffnungen (7) auf einer Seite des Spaltes oder Schlitzes (4, 5) und radial gerichteter Riegelzungen auf der gegenüberliegenden Seite des Spaltes oder Schlitzes (4, 5), die mit diesen zusammenwirken.

4. Durchführungsmuffe nach einem der vorhergehenden Ansprüche, dadurch gekennzeichnet, daß eine Verriegelungs- bzw. Verschlußeinrichtung (14) einen Spalt, Schlitz und/oder eine Ausnehmung (4, 5) innerhalb der Mäntel in einer konstanten Breite oder geschlossen hält, wobei die Verschluß- bzw. Verriegelungseinrichtung (14) ein oder mehrere flexible Verschlußstreifen aufweist, die mit einer Einrichtung (21, 23) auf dem äußeren Mantel oder der Schale (1) derart zusammenwirken, daß es möglich wird, die Breite des Spaltes, Schlitzes und/oder der Ausnehmung (4, 5) einzustellen.

5. Durchführungsmuffe nach Anspruch 4, dadurch gekennzeichnet, daß jeder Verschluß bzw.

Verriegelungsstreifen (14) folgendes aufweist:

a) einen Anker (15), der ständig mit einer Ankeröffnung (21) im äußeren Mantel oder der Schale (2) auf einer Seite einer Ausnehmung bzw. Lücke (5) zwischen zwei sich gegenseitig gegenüberstehenden Rändern (12, 13) des äußeren Mantels oder der Schale (2) verbunden ist, und

b) einen Haken (16), der lösbar mit einem oder einer Anzahl von Hakenöffnungen (23) verbunden ist, die in Umfangrichtung auf der gegenüberliegenden Seite der Ausnehmung bzw. Lücke (5) angeordnet sind.

6. Durchführungsmuffe nach Anspruch 5, dadurch gekennzeichnet, daß die Ankeröffnung (21) Zähne (22) aufweist, die in das Material des Ankers (15) während seines Einsetzens in seine endgültige Arbeitsstellung in der Ankeröffnung (21) einschneiden können, und die ihn gegen eine Bewegung aus der endgültigen Arbeitsstellung halten.

7. Durchführungsmuffe nach einem der Ansprüche 4 bis 6, dadurch gekennzeichnet, daß das Ende eines jeden Verriegelungs- bzw. Verschlußstreifens (14), der den Haken (16) trägt, eine Anhebezunge (17) aufweist, deren Unterseite sich zumindest teilweise von dem Haken (16) weg erstreckt, um es zu erleichtern, den Haken (16) aus der Hakenöffnung (23) anzuheben, in die er eingesetzt worden ist.

**Revendications**

1. Manchon de traversée pour entourer un conduit ou un tuyau (3), ledit manchon comprenant une paroi ou enveloppe extérieure (2) destinée à entourer une matière placée à l'intérieur de l'espace compris entre ledit conduit ou tuyau (3) et la surface intérieure de ladite paroi ou enveloppe extérieure (2), caractérisé en ce que:

(a) ladite paroi ou enveloppe extérieure (2) est une matière en feuille ou en bande flexible ou articulée sensiblement inextensible dans le sens circonférenciel,

(b) la matière qui est molle et souple élastiquement forme une paroi ou chemise intérieure (1),

(c) ladite paroi ou chemise intérieure (1), au moins sur des parties de sa surface extérieure, est collée ou adhère ou est fixée de tout autre manière à la surface intérieure de la paroi ou enveloppe extérieure (2),

(d) ladite paroi ou chemise intérieure (1) est formée par une mousse plastique élastique ou par un caoutchouc mousse élastique, et

(e) ladite paroi ou chemise intérieure (1) est dimensionnée de manière telle par rapport à la paroi extérieure (2) et au conduit ou tuyau (3) que la force élastique de la paroi intérieure (1) est suffisante pour contrecarrer le poids du manchon de traversée (1, 2) ainsi que les forces de vibration auxquelles on peut s'attendre mais insuffisantes pour empêcher le manchon de traversée (1, 2) de se déplacer le long du conduit ou tuyau (3) grâce à l'application d'une force motrice supplémentaire.

2. Manchon de traversée selon la revendication 1, caractérisé en ce que ladite paroi ou enveloppe extérieure (2) et ladite paroi ou chemise intérieure (1) présentent chacune une fente ou interstice ou intervalle longitudinal (4, 5) pour la mise en place latéralement des parois combinées (1, 2) sur ledit conduit ou tuyau (3).

3. Manchon de traversée selon la revendication 2, caractérisé en ce que lesdites fentes ou interstices ou intervalles (4, 5) s'étendent de façon sensiblement radiale et axiale et que des moyens de verrouillage (7, 8) sont présents pour maintenir ledit interstice ou fente ou intervalle sensiblemert fermé lesdits moyens de verrouillage étant profilés et adaptés de manière telle qu'ils sont maintenus de façon libérable dans la position de verrouillage par la pression élastique de la paroi ou chemise intérieure (1), par exemple par le fait qu'ils comprennent, sur un des côtés de l'interstice ou fente (4, 5), des ouvertures (7) dirigées radialement et, sur le côté opposé de l'interstice ou fente (4, 5) des pattes de verrouillage (8) dirigées radialement et adaptées pour coopérer avec cet interstice ou fente.

4. Manchon de traversée selon l'une quelconque des revendications précédentes, caractérisé en ce que les moyens de verrouillage (14) sont adaptés pour maintenir à une largeur constante ou à l'état fermé l'interstice, fente et/ou intervalle (4, 5) formé dans les parois, lesdits moyens de verrouillage (14) comprenant une ou plusieurs bandes de verrouillage flexibles adaptées pour coopérer avec des moyens (21, 23) présents sur la paroi ou enveloppe extérieure (1) de manière à permettre l'ajustement de la largeur dudit interstice, fente et/ou intervalle (4, 5).

5. Manchon de traversée selon la revendication 4, caractérisé en ce que chaque bande de verrouillage (14) comprend:

(a) un moyen d'ancrage (15) adapté pour être fixé de façon permanente à une ouverture d'ancrage (21) formée dans la paroi ou enveloppe extérieure (2) sur un des côtés de l'intervalle (5) entre deux bords (12, 13) qui se font face mutuellement et qui comportent la paroi ou enveloppe extérieure (2), et

(b) un crochet (16) adapté pour être fixé de façon libérable à l'une de plusieurs ouvertures d'accrochage (23) réparties dans le sens circonférenciel sur le côté opposé dudit intervalle (5).

6. Manchon de traversée selon la revendication 5, caractérisé en ce que ladite ouverture d'ancrage (21) comporte des dents (22) adaptées pour mordre dans la matière du moyen d'ancrage (15) pendant son introduction dans sa position de travail finale à l'intérieur de l'ouverture d'ancrage (21) et pour l'empêcher de s'échapper de ladite position de travail finale.

7. Manchon de traversée selon l'une quelconque des revendications 4—6, caractérisé en ce que l'extrémité de chaque bande de verrouillage (14) portant le crochet (16) comporte une patte de soulèvement (17) dont le côté de dessous, au moins en partie, s'étend depuis le crochet (16) pour faciliter le soulèvement du crochet (16) hors de l'ouverture d'accrochage (23) dans laquelle il a été inséré.

EP 0 154 292 B1

FIG.1

FIG.3

FIG.2

1

FIG.4

FIG.5

FIG.6

FIG.7

FIG.8

EP 0 154 292 B1